# EUROPEAN PATENT APPLICATION

(11) **EP 3 352 432 A1**
(43) Date of publication of application: **25.07.2018**
(21) Application number: 17152526.4
(22) Date of filing: 20.01.2017
(51) Int. Cl.: H04L 29/08, H04W 4/02, H04W 64/00

(54) **METHOD AND SYSTEM FOR CLASSIFYING AN ACTIVITY OF A USER**

(71) Applicant: Sentiance NV, 2018 Antwerpen (BE)
(72) Inventor: Spruyt, Vincent, 2600 Antwerpen (BE); Verbist, Frank, B-1861 Wolvertem (BE); Jocquet, Vincent, B-2000 Antwerpen (BE)
(74) Representative: IPLodge bvba

(57) **Abstract**

Method and corresponding system for classifying an activity of a user on the basis of measurements performed by a plurality of sensors comprised in a mobile device associated with said user, the method comprising: obtaining a set of measurements from said plurality of sensors (1100); iteratively deriving user events from said set of measurements, said user events comprising time data, user location data, and user movement data (1110); analyzing said iteratively derived user events to obtain predictions regarding said user events (1120); analyzing said iteratively derived user events and said predictions to obtain circumstances of regarding said user events (1130); and outputting said circumstances to an information system (1190).

## Description

### Field of the Invention

The present invention pertains to the field of sensor-based analysis of user behavior, in particular to systems and methods relying on input from sensors comprised in users' mobile devices.

### Background

United States patent application publication no. US 2013/0178241 A1 discloses a mobile device with a mobile application that communicates with a cloud platform for context based content delivery to the mobile terminal device. The mobile cloud platform includes a mobile cloud virtualization layer, a mobile cloud content delivery layer and a mobile cloud network layer. The mobile cloud virtualization layer functions as a storage and process center. It allocates resources for native applications and other user information storage, content storage for static services, content storage for dynamic services and runs application processes for mobile users independent of the mobile platform. The mobile cloud content delivery layer runs a context-adaptive engine that delivers service provider content to a mobile platform based on space-time context of the user. The mobile cloud network layer forms dynamic local networks as well as high frequency usage networks with other mobile terminal devices based on the user analytical data. While this document discloses the use of the accelerometer of a smart phone to detect motion types such as walking and vehicular motion, it does not explain in detail how such observations can be combined into a meaningful context.

European patent application publication no. EP 2 677 484 A1, assigned to the present applicant, discloses a system for making personalized recommendations to a user of a mobile computing device. The system comprises at least one mobile computing device, a central processing unit, and a memory structure comprising a dataset of personalized data. The at least one mobile computing device is provided with a plurality of sensors arranged for collecting contextual data. The central processing unit comprises receiving means for receiving said collected contextual data. The central processing unit is arranged for combining information from the personalized dataset with the received contextual data, in order to obtain a personalized recommendation. The central processing unit is provided with transmitting means for transmitting the personalized recommendation to the user. The central processing unit is arranged for checking follow-up of the transmitted recommendation by the user by comparing the transmitted recommendation with contextual data received by the central processing unit. The central processing unit is further arranged for basing a further recommendation at least partly on said checked follow-up.

As stated in EP 2 677 484 A1, "humans typically suffer from common defects, including self-deception, cognitive dissonance, confabulations and many more cognitive biases that prevent humans from producing trustworthy information, which in turn prevents accurate behavioral analysis of a human". The system disclosed in EP 2 677 484 A1 attempts to remedy these defects by combining human-generated data with observational data.

It has been found that such combining does not overcome all the defects in the employed human-generated data.

### Summary

It is an object of embodiments of the present invention to rely solely on observed data, and to make adequate decisions on that basis.

According to an aspect of the present invention, there is provided a method for classifying an activity of a user on the basis of measurements performed by a plurality of sensors comprised in a mobile device associated with the user, the method comprising: obtaining a set of measurements from the plurality of sensors; iteratively deriving user events from the set of measurements, the user events comprising time data, user location data, and user movement data; analyzing the iteratively derived user events to obtain predictions regarding the user events; analyzing the iteratively derived user events and the predictions to obtain circumstances of the user events; and outputting the circumstances to an information system.

The present invention is based *inter alia* on the insight of the inventors that while a correct interpretation of short-term observed data (user events; for example: being present at a certain location at a certain time, or being engaged in a specific detectable activity such as driving a car, ...) requires some knowledge of the user's profile to provide the necessary context, an adequate profile can actually be generated by judiciously analyzing user event observations gathered over a longer period of time. These user events are analyzed over time to obtain circumstances (hereinafter also referred to as "moments") that explain the observed user events (for example being present at a certain location that, based on prior observations, can be identified as the person's work place, at a point in time which falls within a time window that, based on prior observations, can be identified as the person's working hours, would thus be identified as "working"; likewise, being engaged in the activity of driving a car, at a time and place that are consistent with the person's daily movements between a place identified as "home" and a place identified as "work", would thus be identified as "commuting"). It is an advantage of the invention that it relies solely on observed data. This advantage is obtained by combining observations acquired over different time scales.

In an embodiment, the method according to the present invention further comprises analyzing the circumstances and the user events to obtain segments.

It is an advantage of this embodiment that users can be categorized into one or more (optionally overlapping) segments of the population, based on automatically detected attributes that are derived from observed events and the associated circumstances ("moments"), and that take on the role of an observed user profile. Each segment is a cluster in the attribute space. The segments are not necessarily static, but may be updated and/or refined over time on the basis of new observations. The combination of events, moments, and segments, may be referred to as the context of the observations.

In an embodiment, the method according to the present invention further comprises analyzing the iteratively derived user events and the predictions to detect a discrepancy between an observed user event and the predictions, and outputting an anomaly signal if such a discrepancy is detected.

It is an advantage of this embodiment that deviations from the observed user event patterns can easily be recognized, and that an information system can adequately respond to such deviations, for example by sending the user useful information based on *inter alia* the time, the user's location, and the user's history.

In an embodiment, the method according to the present invention further comprises analyzing the contexts and the predictions to detect a discrepancy between an observed context and the predictions, and outputting an anomaly signal if such a discrepancy is detected.

It is an advantage of this embodiment that deviations from the observed context patterns can easily be recognized, and that an information system can adequately respond to such deviations, for example by sending the user useful information based on *inter alia* the time, the user's location, and the user's history.

In an embodiment of the method according to the present invention, the measurements are performed by a location subsystem of the mobile device.

The inventors have found, surprisingly, that the data provided by the location subsystem of the mobile device is sufficient to paint an accurate picture of the activities of a mobile device user, when observed over a sufficiently long time. The location subsystem may in particular include one or more of a beacon signal receiver and a GPS or assisted GPS receiver.

In an embodiment of the method according to the present invention, the sensors comprise one or more of an accelerometer, a gyroscope, a magnetometer, a compass, and a barometer.

Sensors of the cited kinds have proven to be particularly useful for the objects of the present invention.

In an embodiment of the method according to the present invention, the measurements are performed by a wireless communication transceiver of the mobile device.

It is an advantage of this embodiment that it enhances the accuracy of the location detection by relying on wireless communication transceivers that are typically available in mobile devices, including a mobile telephony and data transceiver (e.g. GSM, GPRS, UMTS, 3G, LTE; used for example for cell tower triangulation), a wireless local area network transceiver (e.g. an IEEE 802.11 "Wi-Fi" transceiver, used for example for localization by "Wi-Fi fingerprinting"), a wireless local personal area network transceiver (e.g., a Bluetooth or Ultra-Wide Band transceiver).

In an embodiment of the method according to the present invention, the iteratively deriving user events comprises analyzing measurements obtained over a period of at least 48 hours.

The inventors have found that a 48-hour observation period is a minimum to ensure that a pattern of activities repeating on a daily basis can be detected.

In an embodiment of the method according to the present invention, the iteratively deriving user events comprises analyzing measurements obtained over a period of at least two weeks.

The inventors have found that a 2-week observation period is a minimum to ensure that a pattern of activities repeating on a weekly basis can be detected.

According to an aspect of the present invention, there is provided a mobile application comprising code means configured to cause a mobile device to carry out the obtaining and the deriving of the method described above, and to transmit the user events to an analysis engine configured to carry out the analyzing steps of the method described above.

According to an aspect of the present invention, there is provided a computer program product comprising code means configured to cause a processor to obtain user events from one or more mobile devices and to carry out the analyzing steps of the method described above.

According to an aspect of the present invention, there is provided a system for classifying an activity of a user, the system comprising: at least one mobile device comprising a processor and a plurality of sensors operatively connected to the processor, the processor being configured to: obtain a set of measurements from the plurality of sensors and iteratively derive user events from the set of measurements, the user events comprising time data, user location data, and user movement data; and an analysis engine, connected to the at least one mobile device via a wireless data network, the analysis engine being configured to: analyze the iteratively derived user events to obtain predictions regarding the user events, analyze the iteratively derived user events and the predictions to obtain circumstances of the user events, and output the circumstances to an information system.

The technical effects and advantages of embodiments of the mobile application, the computer program product, and the system according to the present invention correspond, *mutatis mutandis,* to those of the corresponding embodiments of the method according to the present invention.

### Brief Description of the Figures

The and other technical features and advantages of embodiments of the present invention will now be described with reference to the accompanying drawings, in which:
- Figure 1 provides a flow chart of an embodiment of the method according to the present invention;
- Figure 2 schematically represents an embodiment of the system according to the present invention; and
- Figure 3 schematically illustrates a further embodiment of the system according to the present invention.

### Detailed Description of Embodiments

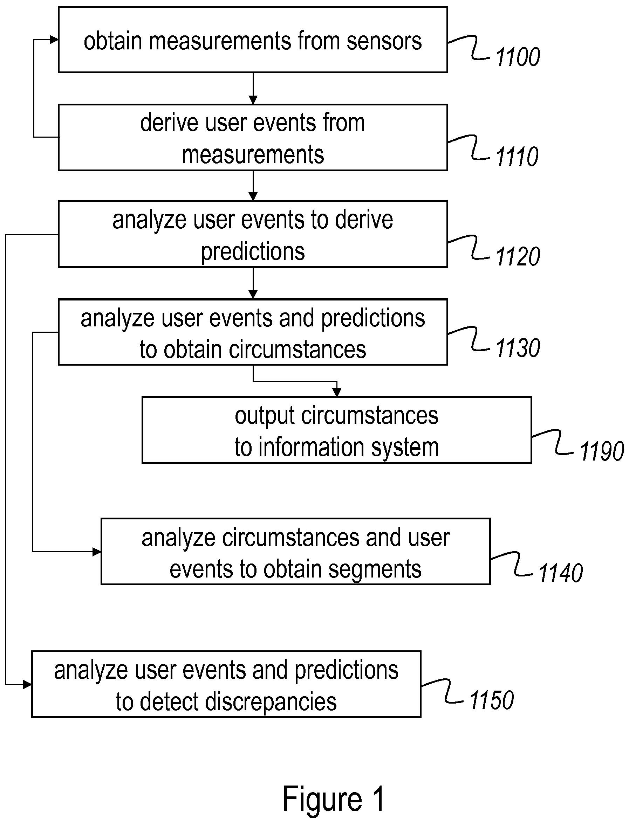

Figure 1 provides a flow chart of an embodiment of the method for classifying an activity of a user on the basis of measurements performed by a plurality of sensors comprised in a mobile device associated with said user, according to the present invention. The method comprises obtaining **1100** a set of measurements from the plurality of sensors (e.g., one or more of an accelerometer, a gyroscope, a magnetometer, a compass, and a barometer). Alternatively or additionally, sensors that are part of the location subsystem of the mobile device may be used (e.g. a GPS receiver or an assisted GPS receiver). Alternatively or additionally, sensors that are part of the communication subsystem may be used (e.g. a mobile telephony, WLAN, or WPAN receiver).

The sensor data undergoes signal processing, such as filtering, to remove noise and artefacts and to facilitate the extraction of useful data. This extraction includes iteratively deriving **1110** user events from the set of measurements, preferably using machine learning. The user events are data structures including at least time data (*when* did the event occur), user location data (*where* did the event occur), and user movement data (*what* occurred). The user movement data may include time-varying motion vectors and acceleration vectors, allowing the motion to be classified as, for example, resting or being idle, sitting, standing, walking, jogging/running, cycling, riding a motorcycle, driving a car, riding a tram or a train, flying aboard an aircraft, and the like, in known manners. The user event data may be augmented by data obtained from external data sources, such as current or predicted traffic information, current or predicted weather information, location-related information including points-of-interest, street names, road types, speed limits, shops and service providers, and the like (for example obtained via a web service).

The iteratively derived user events are then analyzed **1120** to obtain predictions regarding the user events; the predictions can be considered as an observed profile of the user. Once sufficient predictions are available (i.e., when patterns have emerged from the user events), the iteratively derived user events and the predictions are analyzed **1130** in combination to obtain "moments", i.e. circumstances of the user events. The circumstances are output to an information system **1190.**

The method may further comprise analyzing the contexts and the user events to obtain segments **1140.**

Segments may be based on automatically detected attributes that are derived from contexts and user events. Each segment is a cluster in the attribute space, which may be labeled using a human-recognizable typology, thus creating variables defining semantic time and semantic space. For example, in function of the amount of time spent at a place identified as "work" (i.e., the person's "semantic work"), a person may be categorized as a "workaholic"; in function of the regularity of attending a place identified as an educational institution (i.e., the person's "semantic school"), a user may be categorized as a "student"; in function of the regularity of attending places identified as quality restaurants, a person may be categorized as a "food". For a person getting up each day at approximately 7 AM, that time may mark the start of that person's "semantic morning". Another person may work the night shift and may get up every day at 7 PM; for that person, that point in time may mark the start of his "semantic morning". The skilled person will immediately understand how this principle may be generalized across other types of categories or segments. Knowledge of the segment(s) to which a user belongs allows for more personally targeted services and messages to be offered to the user.

The method may further comprise analyzing **1150** the iteratively derived user events and the predictions to detect a discrepancy between an observed user event and the predictions, and outputting an anomaly signal if such a discrepancy is detected. In a similar way, discrepancies between an observed context and the predictions may be detected and reported.

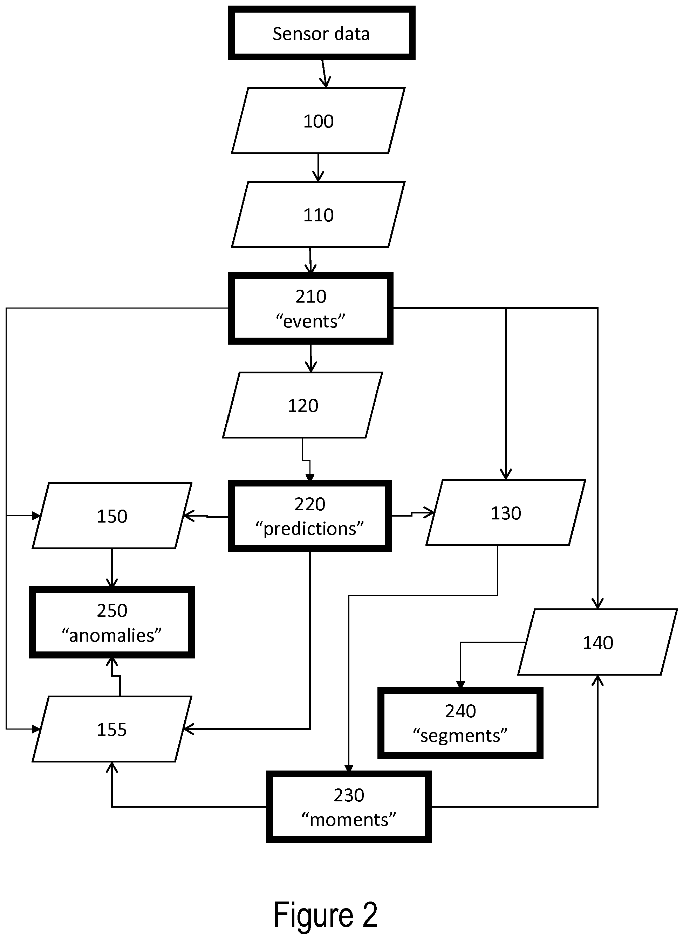

Figure 2 schematically represents an embodiment of the system according to the present invention. The system comprises a number of processing units **110, 120, 130, 140, 150, 155** operating on different types of data present in data stores **210, 220, 230, 240, 250.** While the processing units **110, 120, 130, 140, 150, 155** are depicted as separate elements in Figure 2 for clarity purposes, this is meant as an abstract, functional separation only; the skilled person will understand that the underlying functions may be carried out by a common processing platform. Likewise, while the data stores **210, 220, 230, 240, 250** are depicted as separate elements in Figure 2 for clarity purposes, this is meant as an abstract, functional separation only; the skilled person will understand that the underlying data may be contained in the same physical data storage or in several different physical data storages, which may be local to the system or accessible via a network. The data stores may provide access to the data structures via a database interface, an api, a feed, or similar means.

Data store **210** contains events (related to *what* happens or happened, *when,* and *where*), derived by a machine learning function **110** from the observed and processed sensor data, which may include historic data. The events may be stored in the form of an event timeline. At any given time, the observed data lead to the classification of the ongoing actions as at most one specific event. Examples of events are "at 8:30am, the user is driving on highway A1 Northbound, at location X"; "at 2:15pm, the user is stationary in a coffee shop Y"; "at 9:00pm, the user is moving about in an area designated as 'home'".

Data store **220** contains predictions, derived by a machine learning function **120** from the events in data store **210.** These predictions may pertain to the type of "events" or "moments" that may be expected to take place at certain times and/or locations based on the past observations, and thus form an observed profile of the user.

Data store **230** contains circumstances (also referred to as "moments", related to *why* or *how* things happen or happened), derived by a rule engine **130** from the events in data store **210** and the predictions in data store **220.** The moments may be stored in the form of a moments timeline. At any given time, the observed data may lead to the classification of the ongoing actions as any number of moments. If the event "at 8:30am, the user is driving on highway A1 Northbound, at location X" is detected, and if the prediction store **220** indicates that this movement is on a path from an area designated as 'home' to an area designated as 'work' and tends to happen every working day, the moment "commute" may be concluded to be occurring. For example, if the event "at 2:15pm, the user is stationary in a coffee shop Y" is detected, and if the prediction store **220** indicates that this location is at walking distance from the area designated as 'work' and occurs every Friday, the moment "outside coffee break" may be concluded to be occurring, notwithstanding the fact that an ongoing moment "at work" remains active.

Data store **240** contains segments (related to *who* is/was involved in an event), derived by a machine learning function **140** from the events in data store **210** and moments stored in data store **230.**

Data store **250** stores anomalies, derived by a machine learning function **150** from the events (related to *what* happened, *when,* and *where*) in data store **210** and the predictions in data store **220,** and also derived by a machine learning function **155** from the moments in data store **230** and the predictions in data store **220.** The anomalies comprise divergences between observed events and predicted events (as derived by MLF **150**) and divergences between observed moments and predicted moments (as derived by MLF **155**). These anomalies may trigger any appropriate action, such as a notification to the user or the logging of the anomaly in an anomaly timeline.

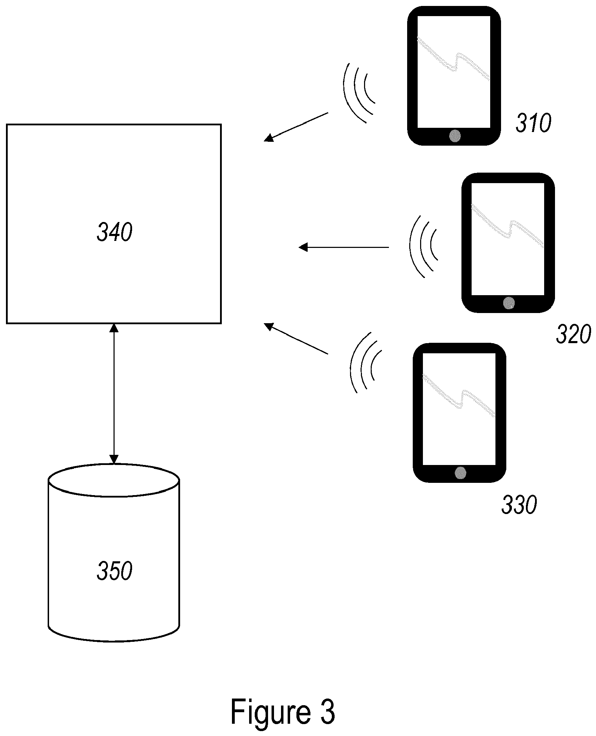

An exemplary implementation of an embodiment of the system according to the present invention will now be described with reference to Figure 3.

The illustrated system for classifying an activity of a user comprises at least one mobile device, associated with a user. Without loss of generality, three mobile devices **310, 320, 330,** are illustrated, each of which would normally be associated with a different user, who carries the mobile device around during her daily activities, allowing the sensors to gather data about the user's movements. Each mobile device comprises a processor and a plurality of sensors operatively connected to said processor (not illustrated). The processor is configured, for example by means of an appropriate mobile application or "app", to obtain a set of measurements from the sensors and to iteratively derive user events from the set of measurements, said user events comprising time data, user location data, and user movement data.

The illustrated system further comprises an analysis engine **340,** connected to the at least one mobile device **310, 320, 330,** via a wireless data network. The wireless data network may be a mobile internet infrastructure, such as an EDGE, GPRS, UMTS, LTE, or similar infrastructure, or a wireless LAN infrastructure, such as an IEEE 802.11 "Wi-Fi" infrastructure, or a combination of several such networks depending on the availability at a present location of the relevant user. The analysis engine may be a server connected to the internet, provided with an appropriate combination of hardware (including for example dedicated hardware such as ASICs, configurable hardware such as FPGAs, and/or programmable hardware such as processors) and software, to carry out the functions described hereinabove in the context of Figures 1 and 2: analyze the iteratively derived user events to obtain predictions regarding the user events; and analyze the iteratively derived user events and said predictions to obtain circumstances of the user events. The analysis engine **340** is further connected (via the internet of any other appropriate internal or external interface as known to the skilled person) to an information system **350** to which the circumstances are provided for storage.

The obtained information regarding user events, circumstances, and segments, may be used by the information system **350** for a variety of purposes, including sending context-specific messages to the mobile device **310, 320, 330** of a particular user, or offering individually customized services to such users.

The mobile devices **310, 320, 330** may be equipped with a mobile application (or "app") that controls the processor and the sensor to operate in accordance with the described methods. In particular, a mobile application according to the present invention comprises code means configured to cause the mobile device to carry out the obtaining **1100** and the deriving **1110** steps of the method described in the context of Figure 1, and to transmit (via its mobile internet connection or other wireless data connection) the user events to an analysis engine **340** configured to carry out the analyzing steps **1120; 1130** of the method described in the context of Figure 1.

The analysis engine **340** may be equipped with a computer program product that controls a processor to operate in accordance with the described methods. In particular, a computer program product according to the present invention comprises code means configured to cause a processor to obtain user events from one or more mobile devices **310, 320, 330** and to carry out the analyzing steps **1120; 1130** of the method described in the context of Figure 1.

It will be understood that if a different division of the steps of Figure 1 between the mobile devices and the analysis engine is chosen, the functions of the mobile application and the computer program product may be adapted accordingly. In particular, one or more of the analyzing steps **1120, 1130, 1140,** may be carried out by the mobile devices **310, 320, 330.**

A first exemplary use case in which the present invention may be applied, is the case of "smart mobility". In this application, sensor data is converted into real-life and real-time behavioral profiles, including rich insights into mobility, commute and driving patterns, in particular by recognizing patterns in "events" and being able to predict the occurrence of "moments" such as commuting, driving children to school, travelling to a holiday destination, and the like. By tracking multimodal transport activities, individualized mobility profiles and heat maps may be generated to provide a contextual view into transport trips and patterns, frequented places and common trajectories. In addition, using the motion sensor data, detailed and multi-layered driving profiles and scores may be generated. These mobility and driving related behavioral insights may be used to power innovative smart mobility services ranging from safe driving coaching, user-based car insurance (pay-how-you-drive), green mobility initiatives and smart city mobility engineering programs.

A second exemplary use case in which the present invention may be applied, is the case of "lifestyle based insurance". Access to behavioral data and insights is shifting insurers to a more proactive way of interacting with their customers. By leveraging lifestyle behavioral data, which may include analyzing the occurrence of "moments" such as resting, walking, working out, and the like, insurance companies will be able to reduce costs and claims by more accurately assessing clients' risk levels. By offering discounts and rewards for safe and healthy behavior and improved habits, they can help change customer behavior and offer more personalized customer experiences tailored to individual lifestyles.

A third exemplary use case in which the present invention may be applied, is the case of "contextual health". Tracking of health-related behavior makes health coaching more personalized, proactive and preventative. Sensor-based artificial intelligence can help users align care and assistance with real-life health and activity patterns, based on the recognition of "moments" that are associated with varying levels of healthy activity, including detection of sudden or gradual changes in those patterns, allowing providers to personalize and contextualize their support and assistance depending on the observed habits and activities of an individual. Moreover, well-being and health coaching can be greatly enhanced by contextualizing health data and assistance, leveraging real-time behavioral insights.

A fourth exemplary use case in which the present invention may be applied, is the case of "contextual marketing & customer loyalty". Contextual marketing refers to the ability to tune marketing content and campaigns to customer context in real-time. Context, more than anything else, defines needs and intent. Understanding a customer's situational context, especially when enriched with other behavioral profile or demographic data, will enable companies and brands to deliver more relevant and engaging customer experiences. The customer is no longer just an identified user in a given place at a given time, but she may now for example be classified as a person belonging to a particular set of "segments", known to be on her weekly tour of preferred shops.

While certain optional features have only been described in the context of embodiments of the method according to the present invention, the skilled person will appreciate that these features can be applied with the same effects and advantages in embodiments of the mobile application, the computer program product, and the system according to the present invention.

While the invention has been described hereinabove with respect to certain embodiments, this was done to illustrate and not to limit the invention, the scope of which is to be determined by reference to the enclosed claims.

## Claims

1. A method for classifying an activity of a user on the basis of measurements performed by a plurality of sensors comprised in a mobile device associated with said user, the method comprising:
- obtaining a set of measurements from said plurality of sensors (1100);
- iteratively deriving user events from said set of measurements, said user events comprising time data, user location data, and user movement data (1110);
- analyzing said iteratively derived user events to obtain predictions regarding said user events (1120);
- analyzing said iteratively derived user events and said predictions to obtain circumstances of regarding said user events (1130); and
- outputting said circumstances to an information system (1190).

2. The method according to claim 1, further comprising analyzing said contexts and said user events to obtain segments (1140).

3. The method according to claim 1 or claim 2, further comprising analyzing said iteratively derived user events and said predictions to detect a discrepancy between an observed user event and said predictions (1150), and outputting an anomaly signal if such a discrepancy is detected.

4. The method according to any of the preceding claims, further comprising analyzing said contexts and said predictions to detect a discrepancy between an observed context and said predictions (1155), and outputting an anomaly signal if such a discrepancy is detected.

5. The method according to any of the preceding claims, wherein said measurements are performed by a location subsystem of said mobile device.

6. The method according to any of the preceding claims, wherein said sensors comprise one or more of an accelerometer, a gyroscope, a magnetometer, a compass, and a barometer.

7. The method according to any of the preceding claims, wherein said measurements are performed by a wireless communication transceiver of said mobile device.

8. The method according to any of the preceding claims, wherein said iteratively deriving user events comprises analyzing measurements obtained over a period of at least 48 hours.

9. The method according to any of the preceding claims, wherein said iteratively deriving user events comprises analyzing measurements obtained over a period of at least two weeks.

10. A mobile application comprising code means configured to cause a mobile device (310; 320; 330) to carry out the obtaining (1100) and the deriving (1110) of the method according to any of the preceding claims, and to transmit said user events to an analysis engine (340) configured to carry out the analyzing steps (1120; 1130) of the method according to any of the preceding claims.

11. A computer program product comprising code means configured to cause a processor (340) to obtain user events from one or more mobile devices (310; 320; 330) and to carry out the analyzing steps (1120; 1130) of the method according to any of the preceding claims.

12. A system for classifying an activity of a user, the system comprising:
- at least one mobile device (310; 320; 330) comprising a processor and a plurality of sensors operatively connected to said processor, said processor being configured to:
∘ obtain a set of measurements from said plurality of sensors (1100); and
o iteratively derive user events from said set of measurements, said user events comprising time data, user location data, and user movement data (1110); and
- an analysis engine (340), connected to said at least one mobile device (310; 320; 330) via a wireless data network, said analysis engine being configured to:
o analyze said iteratively derived user events to obtain predictions regarding said user events (1120);
o analyze said iteratively derived user events and said predictions to obtain circumstances of said user events (1130); and
∘ output (1190) said circumstances to an information system (350).
